# EUROPEAN PATENT SPECIFICATION

(11) **EP 1 788 734 B1**
(45) Date of publication and mention of the grant of the patent: **07.10.2009**
(21) Application number: 05292481.8
(22) Date of filing: 21.11.2005
(51) Int. Cl.: H04B 10/18, H04B 10/158

(54) **Method of transmitting an optical signal and transmission system**
Verfahren zur Übertragung eines optischen Signals und entsprechendes Übertragungssystem
Méthode de transmission d'un signal optique et système de transmission correspondant

(43) Date of publication of application: 23.05.2007
(73) Proprietor: Alcatel Lucent, 75008 Paris (FR)
(72) Inventor: Franz, Bernd, 74336 Brackenheim (DE); Veith, Gustav, 75378 Bad Liebenzell (DE); Bülow, Henning, 70806 Kornwestheim (DE); Dischler, Roman, 70469 Stuttgart (DE)
(74) Representative: Schmidt, Werner Karl

(56) References cited:
- EP-A- 1 545 030
- US-A- 5 227 908
- US-A1- 2005 105 919
- BÜLOW H ET AL: "PMD mitigation at 10 Gbit/s using linear and nonlinear integrated electronic equaliser circuits" ELECTRONICS LETTERS, IEE STEVENAGE, GB, vol. 36, no. 2, 20 January 2000 (2000-01-20), pages 163-164, XP006014736 ISSN: 0013-5194
- DOERR C R ET AL OPTICAL SOCIETY OF AMERICA / INSTITUTE OF ELECTRICAL AND ELECTRONICS ENGINEERS: "Simple multi-channel optical equalizer for mitigating intersymbol interference" OPTICAL FIBER COMMUNICATION CONFERENCE. (OFC). POSTCONFERENCE DIGEST. ATLANTA, GA, MARCH 23 - 28, 2003, TRENDS IN OPTICS AND PHOTONICS SERIES. (TOPS), WASHINGTON, DC : OSA, US, vol. TOPS. VOL. 86, 23 March 2003 (2003-03-23), pages PD11-1-PD11-3, XP010680592 ISBN: 1-55752-746-6

## Description

### Background of the invention

The invention relates to a transmission system comprising at least one optical transmitter coupled to an optical fibre link, at least one optical receiver coupled to said optical fibre link, and optical filter means adapted to reduce a bandwidth of a transmitted optical signal spectrum, wherein the optical receiver comprises an electronic equaliser adapted to suppress an OSNR penalty induced by said optical filter means.

The invention also relates to an optical receiver, in particular for use in a transmission system of the above-defined type, in operative connection with an optical fibre link for receiving optical signals transmitted on said optical fibre link and in operative connection with optical filter means adapted to filter the optical signals, comprising an electronic equaliser adapted to suppress an OSNR penalty induced by said optical filter means.

Furthermore the present invention relates to a method of transmitting an optical signal in an optical transmission system including a transmitter and a receiver, in particular a transmission system of the above-defined type, the method comprising the steps of:
- filtering a first signal representative of the optical signal to reduce a spectral bandwidth of the optical signal, and
- electronically equalising a second signal representative of the optical signal on a receiver side of the optical transmission system to suppress an OSNR penalty induced by the filtering process.

In Dense Wavelength Division Multiplexing (DWDM) optical transmission systems, spectral efficiency and centre wavelength tolerance suffer from a trade-off between bandwidth limitation and inter-channel crosstalk. In prior art systems, degradations due to inter-channel crosstalk are reduced to an acceptable level by choosing an appropriately large DWDM channel spacing at the expense of reduced spectral efficiency and a reduced channel count. For instance, standard 10 Gbit/s DWDM transmission systems (hereinafter also referred to as "platforms") use a 50 GHz DWDM channel granularity for transmitting optical signals with standard modulation formats (e.g., non-return-to-zero (NRZ) amplitude shift keying (ASK) or return-to-zero (RZ) amplitude shift keying).

Due to the detrimental impact of inter-channel crosstalk, the channel number of a DWDM transmission system within a given spectral window (e.g., the C-Band) is limited and will generally decrease with increasing channel bit rate, since an increased bit rate will result in a broadening of the transmitted optical signals in the frequency domain. Thus, state of the art Nx40 Gbit/s DWDM transmission systems with standard NRZ / RZ ASK modulation formats are foreseen to be equipped with 100 GHz DWDM channel granularity in order to avoid penalties in optical signal-to-noise ratio (OSNR) due to inter-symbol interference (ISI). This particular channel spacing value is the result of said trade-off between high channel number and low inter-channel crosstalk. Standard 40 Gbit/s modulation formats cannot be operated over the 50 GHz DWDM channel granularity of standard 10 Gbit/s DWDM platforms due to the unacceptably high associated system penalties induced by inter-channel crosstalk and bandwidth limitations.

However, in order to reduce cost expenditure (CAPEX) by implementing said new system generation based on the next STM bit rate hierarchy, i.e., when stepping from STM64 (10 Gbit/s) to STM256 (40 Gbit/s), it is desirable to reuse the previous DWDM channel granularity, thus increasing the DWDM spectral efficiency.

US 5 277 908, discloses an optical transmission system comprising an optical transmitter which is adapted to output only the carrier wavelength and one sideband of a semiconductor laser source. An optical receiver comprises a linear filter for equalizing the ole-converted single side-band signal received from an optical transmission line. The suppression of one of the two side bands of the optical signal is performed for reducing dispersion distortion caused in the transmission path.

Document US 2005/0105919 A1 discloses an optical transmission system wherein a plurality of optical transmitters are coupled to a transmission fibre through an optical coupler and an optical band-limiting filter. Downstream an optical branching filter, the disclosed system further comprises a number of optical receivers including further optical and electrical filter means as well as an electronic equaliser for to suppress effects of inter-symbol interference (ISI).

Document EP 1 545 030 A2 discloses an optical communication system wherein a optical transmitter converts an electrical signal to an optical signal for transmission over an optical fibre network to an optical receiver which re-converts the optical signal to an electrical signal. The receiver comprises electrical filter means in the form of a continuous time filter and an electronic equaliser for to compensate the effect of inter-symbol interference introduced during signal transmission.

### Object of the invention

It is the object of the present invention to provide a transmission system which obviates the above-mentioned disadvantages by achieving higher spectral efficiency in comparison with prior art systems and which therefore can be used with reduced cost expenditure when implementing a new generation of transmission systems with increased bit rate.

It is also an object of the present invention to provide an optical receiver, which can be used in the transmission system in accordance with the first aspect of the present invention.

Furthermore, it is the object of the present invention to provide a method of transmitting optical signals, which obviates the above-mentioned disadvantages.

### Description of the invention

According to a first aspect of the present invention the object is achieved by means of a transmission system of the above-mentioned type, said transmission system further comprising an electrical filter means on a transmitter side of the transmission system, and said electronic equaliser being further adapted to suppress an OSNR penalty induced by said electrical filter means.

According to a second aspect of the present invention the object is achieved by an optical receiver of the above-mentioned type, wherein the electronic equaliser is further adapted to suppress an OSNR penalty induced by further electrical filter means on a transmitter side of said transmission system.

Furthermore, the object is achieved by providing a method of the above-defined type wherein said filtering process comprises electrical filtering of said first signal representative of the optical signal on a transmitter side of the optical transmission system. Thus, in accordance with the present invention, filtering can be performed on a receiver side and / or on a transmitter side of the optical transmission system. The proposed method allows for transmission of optical signals with an increased channel rate, e.g. due to FEC overhead, over an existing infrastructure without having to increase the filter bandwidths of the transmission system.

In the context of this document, the term "a signal representative of the optical signal" designates either the optical signal itself or an electrical signal which can either be used to generate the optical signal by means of an electrical-to-optical converter (E/O) or which can be generated from the optical signal by means of an optical-to-electrical converter (O/E), as known to a person skilled in the art.

Thus, in accordance with a general idea of the present invention a system solution is proposed, which is based on electronic equalisation of transmitted signals on the receiver side of the transmission system. Said electronic equalisation is combined with spectral filtering in order to enable a higher spectral efficiency and / or higher centre wavelength tolerances of the proposed transmission system.

Said increase of the spectral DWDM efficiency, i.e. a reduction of the required channel spacing, is achieved in accordance with an embodiment of the invention by reducing the optical transmitter signal spectrum using optical and / or electrical filters in combination with an electronic equaliser on the receiver side of the transmission system, which suppresses the OSNR (optical signal-to-noise ratio) penalties due to inter-symbol interference (ISI) induced by (optical) filtering.

In order to enable a flexible operation of the proposed transmission system, in a further embodiment in accordance with the present invention the filter means have an adjustable bandwidth.

Preferably, the electronic equaliser is devised as a linear equaliser. In corresponding further developments of a transmission system in accordance with the present invention, the electronic equaliser comprises at least one of a feed forward equaliser (FFE) and decision feedback equaliser (DFE). Advantageously, and in accordance with another embodiment of the transmission system in accordance with the present invention, the electronic equaliser comprises an n-tap bipolar circuit, preferably an SiGe bipolar circuit. Recent results from experiments and simulations with respect to using electronic equalisers in DWDM optical transmission systems have shown, that electronic equalisers of the above-mentioned types are well-suited for use within the context of the present invention, as will be explained in detail in the "Drawings" section of the present document.

Another beneficial aspect of the transmission system in accordance with the present invention results in the fact, that with the associated reduced signal bandwidth the centre wavelength accuracy requirement for each channel can be relaxed while keeping the granularity of the optical channels constant. In a corresponding further embodiment of the transmission system in accordance with the present invention the optical transmitter therefore comprises a high tolerance centre wavelength light source, in particular an uncooled/unstabilised DWDM laser, which further enhances a cost-effectiveness of the proposed transmission system.

Owing to the specific advantages of the proposed transmission system with respect to an effective suppression of OSNR penalties induced by ISI, using the proposed transmission system in accordance with the present invention is beneficial in single channel configurations as well as in multi-channel configurations. Therefore in a preferred embodiment of the transmission system in accordance with the present invention there are provided a plurality of optical transmitters coupled to the optical fibre link by means of multiplexing means (WDM/DWDM) and a plurality of optical receivers coupled to the optical fibre link by means of demultiplexing means, the optical transmitters being adaptive for optical transmission at different respective wavelengths from a wavelength grid.

In a further embodiment of the transmission system in accordance with the present invention, for a transmission data rate above 39 Gbit/s, a grid spacing of the wavelength grid corresponds to a frequency shift equal to or less than 100 GHz, preferably 50 GHz. In this way, the proposed transmission system achieves an enhanced spectral efficiency with respect to state of the art Nx40 Gbit/s DWDM optical transmission systems.

In another embodiment of the transmission system in accordance with the present invention a transmission data rate is equal to or greater than 10 Gbit/s, in particular equal to or greater than 39 Gbit/s, preferably 43 Gbit/s. When operating at data rates greater than the nominal approx. 40 Gbit/s (STH bit-rate: 39,9...Gbit/s), means adapted to perform a forward error correction (FEC) procedure may be provided in the optical transmission system, as known to a person skilled in the art.

Further advantages and characteristics of the present invention can be gathered from the following description of preferred embodiments with reference to the enclosed drawings. Features mentioned above as well as below can be used in accordance with the invention, either individually or in conjunction. The embodiments mentioned are not to be understood as an exhaustive enumeration but rather as examples with regard to the underlying concept of the present invention.

### Drawings

- Fig. 1: is a schematic block diagram of a transmission system in accordance with the present invention comprising a number of optical receivers in accordance with another aspect of the present invention;
- Fig. 2: is a block diagram of an electronic equaliser used in accordance with the present invention;
- Fig. 3: is a diagram showing experimental results concerning suppression of OSNR penalty at 43 Gbit/s by means of the electronic equaliser in Fig. 2;
- Fig. 4: is a schematic block diagram of a second embodiment of the transmission system in accordance with the present invention;
- Fig. 5: is a schematic block diagram of a third embodiment of the transmission system in accordance with the present invention; and
- Fig. 6: is a schematic block diagram of a fourth embodiment of the transmission system in accordance with the present invention.

The following detailed description of the invention refers to the accompanying drawings. Same reference numerals may be used in different drawings to identify the same or similar elements.

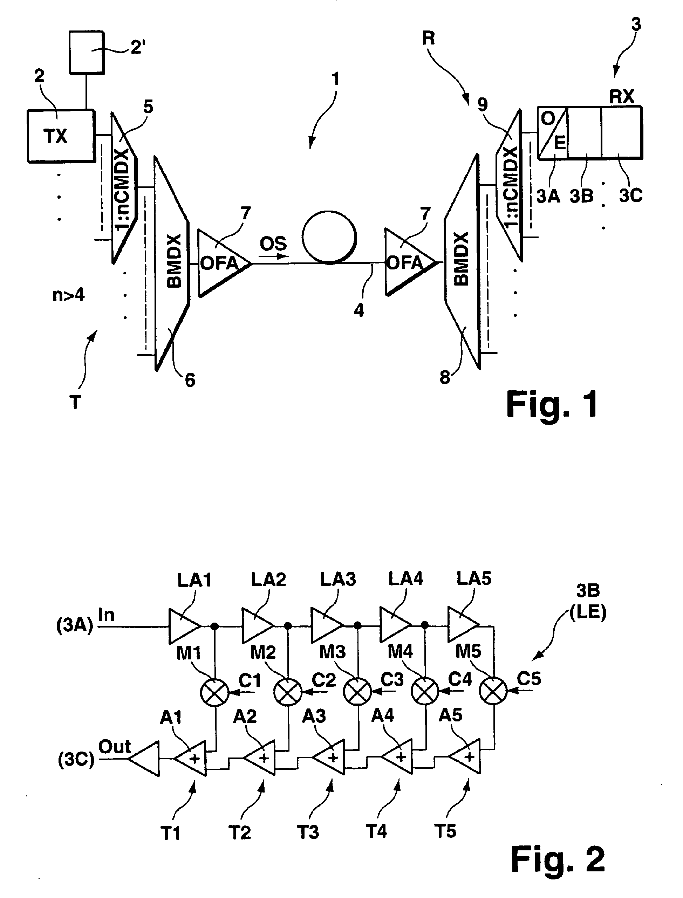

**Fig. 1** is a schematic block diagram of a transmission system **1** in accordance with the present invention. The transmission system 1 of Fig. 1 is generally devised as a state of the art Nx40 Gbit/s Dense Wavelength Division Multiplexing (DWDM) transmission system with standard NRZ / RZ ASK modulation format. To this end, the transmission system 1 comprises a number of optical transmitters **2** operating at different optical wavelengths and a corresponding number of optical receivers **3.** For reason of clarity, only one optical transmitter 2 and only one optical receiver 3, respectively, are shown. In the embodiment of Fig. 1, on a transmitter side **T** of the transmission system 1 a plurality of optical transmitters 2 are coupled to an optical fibre link **4** by means of first **5** and second **6** multiplexing means, wherein said first multiplexing means 5 are devised as a channel multiplexer /demultiplexer CMDX and are respectively coupled to a plurality of n optical transmitters 2 (n > 4, e.g. n = 6), and wherein the second multiplexing means 6 are devised as a band multiplexer / demultiplexer BMDX, as known to a person skilled in the art. Behind the multiplexing means 5, 6, on the optical fibre link 4 there is arranged at least one optical fibre amplifier **7** (OFA), e.g. devised as a discrete or distributed Raman amplifier or EDFA, for amplifying optical signals **OS** propagated on the optical fibre link 4, as known to a person skilled in the art. The optical transmitters 2 are operatively connected with a light source 2', e.g. a laser diode operating at a suitable optical wavelength.

On a receiver side **R** of the transmission system 1 a plurality of optical receivers 3only one of which is depicted for reasons of clarity - are coupled to the optical fibre link 4 by means of first **8** and second demultiplexing means **9,** which in analogy to the above-described multiplexing means 5, 6 on the transmitter side T of the transmission system 1 are devised as a band multiplexer / demultiplexer BDMX 8 and a plurality of channel multiplexers / demultiplexers CMDX 9 in accordance with a number of transmission bands provided in the transmission system 1. Again, for reasons of clarity, only one channel demultiplexer 9 is shown in Fig. 1.

In accordance with the present invention, the optical receivers 3 comprise an optical-to-electrical conversion unit **3A,** an electronic equaliser **3B** and a CDR (clock and data recovery) / deserialiser unit **3C.**

As known to a person skilled in the art, in the above-described transmission system 1 an OSNR penalty is induced on the transmitted optical signals OS due to reduction of the optical signal bandwidth by optical filtering, e.g., by means of optical filters (not shown explicitly) comprised in the first 5 and second multiplexing means 6 of the transmission system 1. Said OSNR penalties are related to inter-symbol interference (ISI) induced by said optical filtering. In order to obviate this inherent drawback of the optical transmission system 1, in particular when using a narrow wavelength grid in the first 5 and second multiplexing means 6 for to achieve a small channel granularity of, e.g., 50 GHz, the invention proposes to use said electronic equaliser 3B in the optical receivers 3 for to compensate said OSNR penalty.

A suitable electronic equaliser for this task has been described recently by Franz et al. in a paper on "43 Gbit/s SiGe Based Electronic Equaliser for PMD and Chromatic Dispersion Mitigation", proc. ECOC 2005, Glasgow, paper We1.3.1.

**Fig. 2** shows a block diagram of an example of an electronic equaliser 3B, comprised in the optical receivers 3 (Fig. 1). The electronic equaliser 3B is devised as a 5-tap linear equaliser (LE) which consists of five fractionally spaced taps **T1-T5**. Each tap **T1-T5** includes a linear amplifier **LA1-LA5** with unity gain, a multiplier **M1-M5** to weight an input signal arriving from the optical-to-electrical converter 3A (Fig. 1) with a respective tap coefficients **C1-C5** and an adder **A1-A5.** A respective tap delay is obtained by a transit time through the amplifier LA1-LA5 and the adder A1-A5. Each tab T1-T5 of the LE provides bipolar multiplication in the range of -1 to 1. An output signal of the electronic equaliser 3B is applied to the CDR / deserialiser unit 3C of Fig. 1. In further embodiments of the electronic equaliser 3B, the latter can further comprise an electronic decision feedback equaliser (DFE) or electronic decision feedback filter (DFF) (not shown) arranged behind the LE, which effectively functions as a decision circuit.

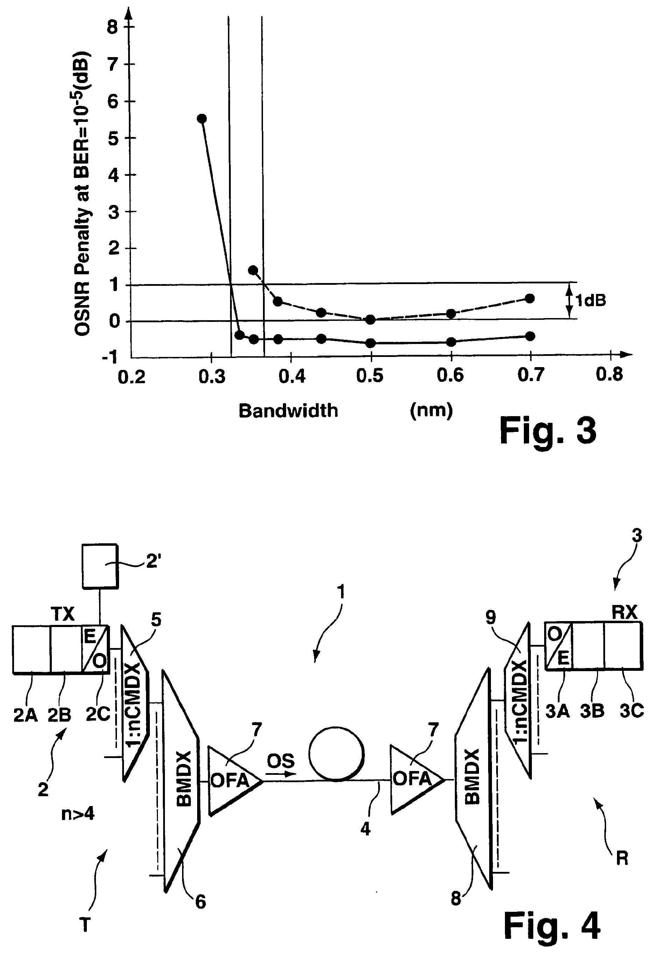

**Fig. 3** shows experimental results in connection with the suppression of OSNR gain at 43 Gbit/s achieved by means of the electronic 5-tap linear equaliser (LE) of Fig. 2. The diagram of Fig. 3 shows an OSNR penalty at a bit error rate (BER) of 10⁻⁵ measured in decibel (dB) versus an optical bandwidth measured in nanometers (nm). A solid line in the diagram of Fig. 3 shows the experimental results achieved with equalisation whereas the dashed line in Fig. 3 illustrates the experimental results without equalisation. As can be gathered of Fig. 3, the linear equaliser of Fig. 2 on the receiver side R of the transmission system 1 (Fig. 1) compensates an optical bandwidth reduction of approximately 10 % corresponding to an OSNR penalty of 1 dB. Simulations further show that the above-described solution based on an electronic linear equaliser 3B in combination with an electronic decision feedback equaliser (DFE) has the potential to suppress even higher OSNR penalties induced by strong optical filtering. This particular feature of the present invention allows the transmission of Nx43 Gbit/s channels over a 10 Gbit/s DWDM platform with 50 GHz channel granularity.

In this way, in accordance with the present invention strong optical filtering, e.g. in the multiplexing means 5, 6 of Fig. 1, which is necessary to reduce the detrimental impact of inter-channel crosstalk, may be used to provide a small channel spacing of DWDM systems, while at the same time compensating the OSNR penalty induced by said reduction of the signal bandwidth due to the filtering process. Thus, an operation of Nx40 Gbit/s channels over the 50 GHz granularity of a standard 10 Gbit/s DWDM platform, such as A1626LM, is enabled.

During operation the OSNR gain provided by the electronic equaliser 3B of Figs. 1 and 2 can be used to effectively reduce the channel spacing and / or to increase the channel count n (and thus the spectral efficiency) of the (DWDM) transmission system 1.

**Fig. 4** shows a second embodiment of the transmission system 1 in accordance with the present invention. The embodiment of Fig. 4 differs from the embodiment of Fig. 2 in that the optical transmitters 2 of the embodiment in accordance with Fig. 4 comprise a serialiser **2A** followed by an electronic low-pass filter **2B** and an electrical-to-optical (E/O) conversion unit **2C.** In said second embodiment in accordance with the present invention the electrical low-pass filtering on the transmitter side T is used to reduce the optical bandwidth of the respective modulated channel. This enables a further reduction of the channel spacing and a potentially higher channel count n in comparison with the first embodiment of the transmission system in accordance with a present invention as described above with reference to Fig. 1. The low-pass filter 2B can be implemented by means of a modulator driver for the electric-to-optical converter 2C with required reduced bandwidth.

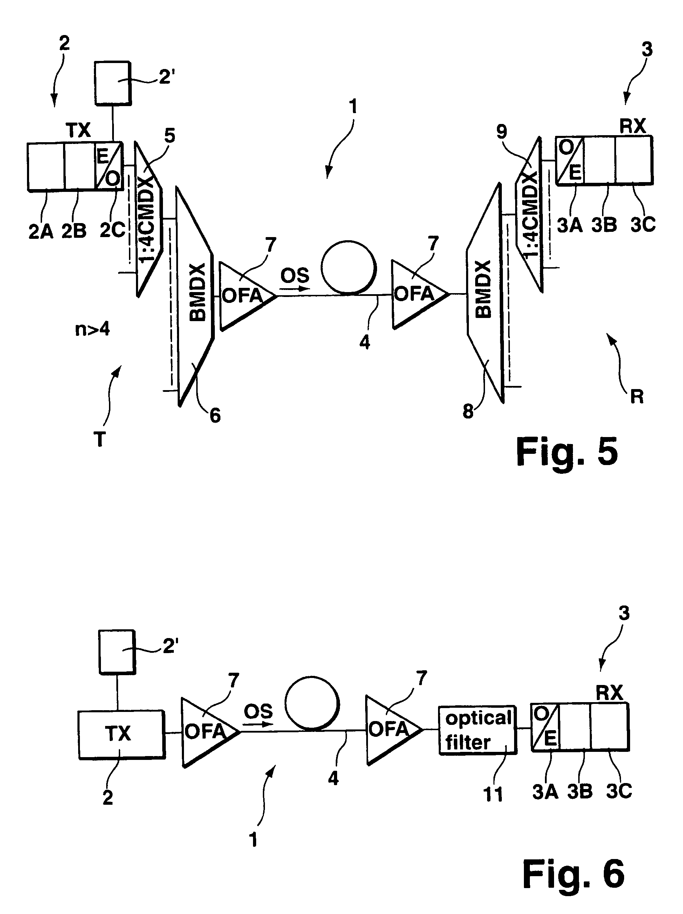

**Fig. 5** shows a third embodiment of the transmission system 1 in accordance with the present invention. The embodiment of Fig. 5 differs from the above-described embodiment of Fig. 4 in that the channel count n is defined as n = 4 as in prior art systems. Furthermore, the transmission system 1 according to Fig. 5 may comprise a forward error correction (FEC) decoder unit in operative connection with the CDR / deserialiser unit 3C at the receiver side R and a respective FEC encoder unit in operative connection with the serialiser unit 2A on the transmitter side T (not shown). By suppressing the impact of inter-channel crosstalk as described in detail above with reference to the embodiments of Figs. 1 and 4, a higher tolerance against variation of a central optical wavelength on each channel is achieved. This allows the use of lower quality (high tolerance centre wavelength) light sources 2' in connection with the electrical-to-optical converter 2C, e.g. the use of uncooled / unstabilized DWDM laser sources as light sources 2', in comparison with the prior art when operating Nx40 Gbit/s channels over a 100 GHz granularity DWDM platform.

Alternatively, the resulting system gain can be used for to increase the channel bit rate, e.g. for implementation of forward error correction (FEC) overhead, while keeping the DWDM granularity (channel spacing with respect to channel wavelength) constant. This requires a 7% bit rate increase from 40 to 43 Gbit/s or higher, which complies with the characteristics of the electronic equaliser 3B as described above with reference to Figs. 1 and 2.

**Fig. 6** shows a fourth embodiment of the transmission system 1 in accordance with the present invention, wherein an electronic equaliser 3B in the optical receivers 3 is used in a single channel configuration, i.e. in a transmission system 1 comprising only one transmitter 2 and one receiver 3 coupled by means of an optical fibre link 4. As in the embodiments of Figs. 1, 4, and 5 the transmission system 1 comprises a number of optical fibre amplifiers 7 (OFA) in the optical fibre link 4, which induce noise on the optical signals OS propagated on the optical fibre link 4. In order to reduce the effect of said noise on the transmitted optical signal OS an optical filter **11** is provided behind the last optical fibre amplifier 7 on the optical fibre link 4 and before the optical-to-electrical converter 3A of the optical receiver 3 on the receiver side R of the transmission system 1. As described in detail above, the optical filter 11 leads to a decreased OSNR due to resulting ISI. Therefore, in accordance with the present invention, the electronic equaliser 3B allows for a reduced optical filter bandwidth of the optical filter 11 by equalising the resulting ISI, thus increasing the OSNR.

## Claims

1. A transmission system (1) comprising a plurality of optical transmitters (2) coupled to an optical fibre link (4) by means of multiplexing means (5, 6), a plurality of optical receivers (3) coupled to said optical fibre link (3) by means of demultiplexing means (8, 9), and optical filter means (5, 6, 8, 9, 11) adapted to reduce a bandwidth of a transmitted optical signal spectrum, wherein the optical receiver (3) comprises an electronic equaliser (3B) adapted to suppress an OSNR penalty induced by said optical filter means (5, 6, 8, 9, 11), wherein the optical transmitters (2) are adapted for optical transmission at different respective wavelengths from a wavelength grid, wherein said transmission system (1) further comprises an electrical filter means (2B) on a transmitter side (T) of the transmission system (1), and wherein said electronic equaliser (3B) is further adapted to suppress an OSNR penalty induced by said electrical filter means (2B).

2. The transmission system (1) according to claim 1, **characterised in that** at least one of said optical (5, 6, 8, 9, 11) and electrical (2B) filter means has an adjustable bandwidth.

3. The transmission system (1) according to claim 1, **characterised in that** the electronic equaliser (3B) is a linear equaliser (LE).

4. The transmission system (1) according to claim 1, **characterised in that** the electronic equaliser (3B) comprises at least one of a feed forward equaliser (FFE) and a decision feedback equaliser (DFE).

5. The transmission system (1) according to claim 1, **characterised in that** the electronic equaliser (3B) comprises an n-tap bipolar circuit, preferably an n-tap SiGe bipolar circuit.

6. The transmission system (1) according to claim 1, **characterised in that** the optical transmitter (2) comprises a high tolerance centre wavelength light source (2'), in particular an uncooled DWDM laser.

7. The transmission system (1) according to claim 1, **characterised in that** for a transmission data rate above 39 Gbit/s, a grid spacing of the wavelength grid corresponds to a frequency spacing equal to or less than 100 GHz, preferably 50 GHz.

8. The transmission system (1) according to claim 1, **characterised in that** a transmission data rate is equal to or greater than 10 Gbit/s, in particular equal to or greater than 39 Gbit/s, preferably 43 Gbit/s.

9. A method of transmitting an optical signal (OS) in an optical transmission system (1) according to claim 1, the method comprising the steps of:
- filtering a first signal representative of the optical signal (OS) to reduce a spectral bandwidth of the optical signal, and
- electronically equalising a second signal representative of the optical signal (OS) on a receiver side (R) of the optical transmission system to suppress an OSNR penalty induced by the filtering process,
wherein said filtering process comprises optical and electrical filtering of said first signal representative of the optical signal (OS) on a transmitter side (T) of the optical transmission system, and wherein said method further comprises multiplexing the optical signal (OS) at the transmitter side (T) and demultiplexing the optical signal (OS) at the receiver side (R).

## Patentansprüche

1. Ein Übertragungssystem (1), welche eine Vielzahl von anhand von Multiplex-Mitteln (5, 6) an einen faseroptischen Link (4) gekoppelte optische Sender (2), eine Vielzahl von anhand von Demultiplex-Mitteln (8, 9) an den besagten faseroptischen Link (3) gekoppelte optische Empfänger (3) und optische Filtermittel (5, 6, 8, 9, 11), welche dazu ausgelegt sind, eine Bandbreite eines übertragenen Spektrums des optischen Signals zu verringern, umfasst, wobei der optische Empfänger (3) einen elektronischen Entzerrer (3B) umfasst, welcher dazu ausgelegt ist, eine von den besagten optischen Filtermitteln (5, 6, 8, 9, 11) induzierte OSNR-Penalty zu unterdrücken, wobei die optischen Sender (2) für die optische Übertragung in jeweils verschiedenen Wellen langen eines Wellenlängengitters ausgelegt sind, wobei das besagte Übertragungssystem (1) weiterhin ein elektrisches Filtermittel (2B) an einer Senderseite (T) des Übertragungssystems (1) umfasst, und wobei der besagte elektronische Entzerrer (3B) weiterhin dazu ausgelegt ist, eine von dem besagten elektrischen Filtermittel (2B) induzierte OSNR-Penalty zu unterdrücken.

2. Das Übertragungssystem (1) nach Anspruch 1, **dadurch gekennzeichnet, dass** mindestens entweder das besagte optische (5, 6, 8, 9, 11) oder das besagte elektrische (2B) Filtermittel eine anpassbare Bandbreite aufweist.

3. Das Übertragungssystem (1) nach Anspruch 1, **dadurch gekennzeichnet, dass** der elektronische Entzerrer (3B) ein linearer Entzerrer (LE) ist.

4. Das Übertragungssystem (1) nach Anspruch 1, **dadurch gekennzeichnet, dass** der elektronische Entzerrer (3B) mindestens entweder einen Feed-Forward-Entzerrer (FFE) oder einen Entscheidungs-Feedback-Entzerrer (DFE) umfasst.

5. Das Übertragungssystem (1) nach Anspruch 1, **dadurch gekennzeichnet, dass** der elektronische Entzerrer (3B) eine bipolare N-Tap-Schaltung, vorzugsweise eine bipolare N-Tap-SiGe-Schaltung umfasst.

6. Das Übertragungssystem (1) nach Anspruch 1, **dadurch gekennzeichnet, dass** der optische Sender (2) eine Zentralwellenlängen-Lichtquelle mit hoher Toleranz (2'), insbesondere einen ungekühlten DWDM-Laser, umfasst.

7. Das Übertragungssystem (1) nach Anspruch 1, **dadurch gekennzeichnet, dass** bei einer Datenübertragungsrate über 39 Gbif/s ein Rasterabstand des Wellenlängengitters eines Frequenzabstands, welcher gleich oder niedriger als 100 GHz, vorzugsweise 50 GHz ist, entspricht.

8. Das Übertragungssystem (1) nach Anspruch 1, **dadurch gekennzeichnet, dass** eine Datenübertragungsrate gleich oder höher als 10 Gbit/s, insbesondere gleich oder höher als 39 Gbit/s, vorzugsweise 43 Gbit/s ist.

9. Ein Verfahren zur Übertragung eines optischen Signals (OS) in einem optischen Übertragungssystem (1) nach Anspruch 1, wobei das Verfahren die folgenden Schritte umfasst:
- Filtern eines ersten Signals, welches für das optische Signal (OS) repräsentativ ist, um eine spektrale Bandbreite des optischen Signals zu verringern, und
- elektronisches Entzerren eines zweiten Signals, welches für das optische Signal (OS) auf einer Empfängerseite (R) des optischen Übertragungssystems repräsentativ ist, um eine vom Filterprozess induzierte OSNR-Penalty zu unterdrücken,
wobei der besagte Filterprozess das optische und elektrische Filtern des besagten ersten Signals, welches für das optische Signal (OS) an einer Senderseite (T) des optischen Übertragungssystems repräsentativ ist, umfasst, und wobei das besagte Verfahren weiterhin das Multiplexen des optischen Signals (OS) an der Sendersende (T) und das Demultiplexen des optischen Signals (OS) an der Empfängerseit (R) umfasst.

## Revendications

1. Système de transmission (1) comprenant une pluralité d'émetteurs optiques (2) connectés à une liaison à fibre optique (4) par le biais de moyens de multiplexage (5, 6), une pluralité de récepteurs optiques (3) connectés à ladite liaison à fibre optique (3) par le biais de moyens de démultiplexage (8, 9), et des moyens de filtrage optique (5, 6, 8, 9, 11) adaptés pour réduire une largeur de bande d'un spectre de signal optique émis, le récepteur optique (3) comprenant un égaliseur électronique (3B) adapté pour supprimer une pénalité d'OSNR provoquée par lesdits moyens de filtrage optique (5, 6, 8, 9, 11), les émetteurs optiques (2) étant adaptés pour l'émission optique à différentes longueurs d'onde respectives d'une grille de longueurs d'onde, ledit système de transmission (1) comprenant en plus des moyens de filtrage électrique (2B) sur un côté émetteur (T) du système de transmission (1), et ledit égaliseur électronique (3B) étant en plus adapté pour supprimer une pénalité d'OSNR provoquée par lesdits moyens de filtrage électrique (2B),

2. Système de transmission (1) selon la revendication 1, **caractérisé en ce qu'**au moins l'un desdits moyens de filtrage optique (5, 6, 8, 9, 11) et électrique (2B) possède une largeur de bande réglable.

3. Système de transmission (1) selon la revendication 1, **caractérisé en ce que** l'égaliseur électronique (3B) est un égaliseur linéaire (LE).

4. Système de transmission (1) selon la revendication 1, **caractérisé en ce que** l'égaliseur électronique (3B) comprend au moins un égaliseur par correction aval (FFE) ou un égaliseur par retour de décision (DFE).

5. Système de transmission (1) selon la revendication 1, **caractérisé en ce que** l'égaliseur électronique (3B) comprend un circuit bipolaire n-tap, de préférence un circuit bipolaire n-tap au SiGe.

6. Système de transmission (1) selon la revendication 1, **caractérisé en ce que** l'émetteur optique (2) comprend une source de lumière (2') avec longueur d'onde centrale à tolérance élevée, notamment un laser DWDM non refroidi.

7. Système de transmission (1) selon la revendication 1, **caractérisé en ce que** pour une vitesse de transmission supérieure à 39 Gbits/s, un espacement de la grille de longueurs d'onde correspond à un espacement des fréquences égal ou inférieur à 100 GHz, de préférence de 50 GHz.

8. Système de transmission (1) selon la revendication 1, **caractérisé en ce que** qu'une vitesse de transmission est égale ou supérieure à 10 Gbits/s, notamment égale ou supérieure à 39 Gbits/s, de préférence de 43 Gbits/s.

9. Procédé d'émission d'un signal optique (OS) dans un système de transmission optique (1) selon la revendication 1, le procédé comprenant les étapes suivantes :
- Filtrage d'un premier signal représentatif du signal optique (OS) afin de réduire une largeur de bande spectrale du signal optique, et
- Égalisation électronique d'un deuxième signal représentatif du signal optique (OS) d'un côté récepteur (R) du système de transmission optique afin de supprimer une pénalité d'OSNR provoquée par le processus de filtrage,
ledit processus de filtrage comprenant le filtrage optique et électrique dudit premier signal représentatif du signal optique (OS) d'un côté émetteur (T) du système de transmission optique, et ledit procédé comprenant en plus le multiplexage du signal optique (OS) du côté de l'émetteur (T) et le démultiplexage du signal optique (OS) du côté du récepteur (R).
